# EUROPÄISCHE PATENTSCHRIFT

(11) **EP 0 893 020 B1**
(45) Veröffentlichungstag und Bekanntmachung des Hinweises auf die Patenterteilung: **23.01.2002**
(21) Anmeldenummer: 97920578.8
(22) Anmeldetag: 03.04.1997
(51) Int. Cl.: H04M 1/60

(54) **FERNSPRECHENDGERÄT MIT EINEM ANSCHLUSS FÜR EINEN TELEFON-HANDAPPARAT**
TELEPHONE TERMINAL WITH A CONNECTION FOR A TELEPHONE HANDSET
TERMINAL TELEPHONIQUE POURVU D'UN RACCORDEMENT A UN COMBINE TELEPHONIQUE

(30) Priorität: 10.04.1996 DE 19614148
(43) Veröffentlichungstag der Anmeldung: 27.01.1999
(73) Patentinhaber: SIEMENS AKTIENGESELLSCHAFT, 80333 München (DE)
(72) Erfinder: REICHSTEIN, Martin, D-31137 Hildesheim (DE)
(86) Internationale Anmeldenummer: DE9700677
(87) Internationale Veröffentlichungsnummer: WO9738514

(56) Entgegenhaltungen:
- EP-A- 0 560 446
- DE-A- 3 616 314
- DE-A- 3 623 017
- DE-A- 4 408 324
- GB-A- 2 195 865
- US-A- 4 672 663
- US-A- 4 930 156
- US-A- 5 191 602

## Beschreibung

### Stand der Technik

Die Erfindung geht von einem Fernsprechendgerät nach der Gattung des Hauptanspruchs aus.

Aus der EP 0 560 446 A2 ist bereits ein Fernsprechapparat mit einem Handapparat bekannt, bei dem eine Freisprecheinrichtung im Handapparat angeordnet ist. Der Handapparat umfaßt einen magnetischen Schaltkontakt, der bei Ablage des Handapparates auf einer Bedienhörerauflage durch einen in der Bedienhörerauflage angeordneten Magneten geschlossen ist. Durch Auswertung des Schaltzustandes des magnetischen Schaltkontaktes kann somit festgestellt werden, ob der Handapparat auf der Bedienhörerauflage aufliegt oder davon abgehoben ist. Durch Auswertung des Schaltzustandes des magnetischen Schaltkontaktes ist bei aufgelegtem Bedienhörer die Schaltungsanordnung in den Freisprechbetrieb geschaltet.

### Vorteile der Erfindung

Das erfindungsgemäße Fernsprechendgerät mit den Merkmalen des Hauptanspruchs hat demgegenüber den Vorteil, daß eine automatische Umschaltung zwischen der Freisprecheinrichtung und dem Telefonhandapparat in Abhängigkeit des Zustandes des Telefonhandapparates erfolgt, so daß die Umschaltung nicht die Intelligenz des Benutzers voraussetzt und dem Benutzer die Bedienung des Fernsprechendgerätes erleichtert.

Ein weiterer Vorteil besteht darin, daß eine Prüfschaltung vorgesehen ist, die das Erkennen nicht nur des aufgelegten oder abgenommenen Zustandes eines an das Fernsprechendgerät angeschlossenen Telefonhandapparates erkennt, sondern auch, ob überhaupt ein Telefonhandapparat an das Fernsprechendgerät angeschlossen ist. Die Prüfschaltung ermöglicht somit die Erkennung von mehr als zwei Zuständen.

Ein weiterer Vorteil besteht darin, daß durch Verwendung der Prüfschaltung die Freisprecheinrichtung auch getrennt vom Telefonhandapparat angeordnet sein kann. Auf diese Weise läßt sich der Anbringungsort der Freisprecheinrichtung unabhängig vom Anbringungsort des Telefonhandapparates wählen.

Durch die in den Unteransprüchen aufgeführten Maßnahmen sind vorteilafte Weiterbildungen und Verbesserungen des im Hauptanspruch angegebenen Fernsprechendgerätes möglich.

Vorteilhaft nach Anspruch 2 ist die Verwendung des ersten Poles des Anschlusses für den Telefonhandapparat für die Prüfschaltung. Auf diese Weise erfordert die Verwendung der Prüfschaltung keine zusätzlichen Verbindungsleitungen, so daß Aufwand und Kosten eingespart werden.

Vorteilhaft nach Anspruch 4 ist die Integration eines Rundfunkempfangsgerätes in das Fernsprechendgerät. Auf diese Weise können die Lautsprecher des Rundfunkempfangsgerätes von der Freisprecheinrichtung mitbenutzt werden.

### Zeichnung

Ein Ausführungsbeispiel der Erfindung ist in der Zeichnung dargestellt und in der nachfolgenden Beschreibung näher erläutert. Es zeigen
- Figur 1: ein erfindungsgemäßes Fernsprechendgerät mit Prüfschaltung und
- Figur 2: einen Ablaufplan für die Steuerung der Umschaltung zwischen Freisprecheinrichtung und Telefonhandapparat.

### Beschreibung des Ausführungsbeispiels

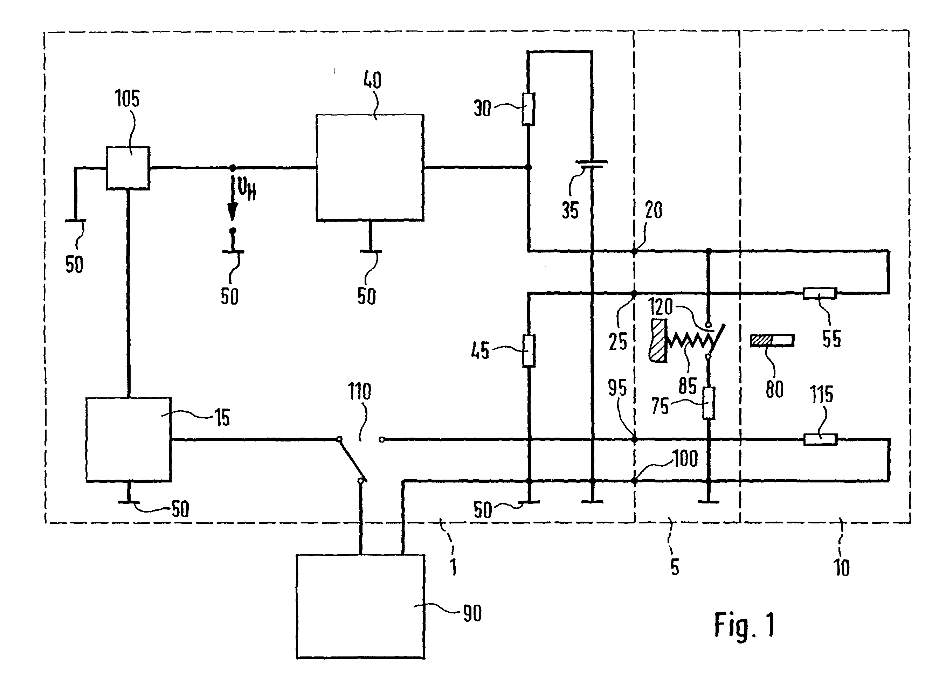

In Figur 1 kennzeichnet 1 ein Fernsprechendgerät. Das Fernsprechendgerät 1 weist einen vierpoligen Anschluß 20, 25, 95, 100 zum Anschluß eines Telefonhandapparates 5, 10 auf. Der erste Pol 20 ist über einen ersten Widerstand 30 und eine Gleichspannungsquelle 35 mit einem Bezugspotential 50 verbunden. Der erste Pol 20 ist außerdem über eine Überspannungsschutzschaltung 40 an einen Analog-Digital-Wandler 105 angeschlossen, der seinerseits mit einer Steuerschaltung 15 verbunden ist. Die Steuerschaltung 15 steuert einen Umschalter 110, der in einer ersten Schalterstellung eine Freisprecheinrichtung 90 mit der Steuerschaltung 15 und in einer zweiten Schalterstellung einen dritten Pol 95 des vierpoligen Anschlusses 20, 25, 95, 100 mit der Steuerschaltung 15 verbindet. Ein zweiter Pol 25 des vierpoligen Anschlusses 20, 25, 95, 100 ist im Fernsprechendgerät 1 über einen zweiten Widerstand 45 mit dem Bezugspotential 50 verbunden. Das Bezugspotential 50 ist außerdem mit einem vierten Pol 100 des vierpoligen Anschlusses 20, 25, 95, 100, mit der Überspannungsschutzschaltung 40, mit dem Analog-Digital-Wandler 105, mit der Steuerschaltung 15 und mit der Freisprecheinrichtung 90 verbunden. Der Telefonhandapparat 5, 10 umfaßt eine Auflage 5 und einen auf der Auflage 5 auflegbaren Handhörer 10. Die Auflage 5 weist einen vierpoligen Kontakt zum Anschluß des Telefonhandapparates 5, 10 an das Fernsprechendgerät 1 auf. Handhörer 10 und Auflage 5 sind über ein nicht dargestelltes Kabel elektrisch leitend miteinander verbunden. Auf diese Weise ist bei an das Fernsprechendgerät 1 angeschlossenem Telefonhandapparat 5, 10 gemäß Figur 1 die durch ihren Innenwiderstand dargestellte Hörkapsel 55 des Handhörers 10 an den ersten und den zweiten Pol 20 und 25 angeschlossen und das ebenfalls durch seinen Innenwiderstand dargestellten Mikrofon 115 des Handhörers 10 an den dritten und den vierten Pol 95 und 100 angeschlossen. Über einen Schalter 120 in der Auflage 5 ist ein dritter Widerstand 75 an den ersten Pol 20 und den vierten Pol 100 anschließbar. Der Schalter 120 in der Auflage ist bei nicht aufgelegtem Handhörer 10 durch die Federkraft einer Feder 85 geöffnet. Der Handhörer 10 weist einen Magneten 80 auf, der so gepolt ist, daß der Schalter 120 bei aufgelegtem Handhörer 10 im Magnetfeld des Magneten 80 gegen die Federkraft der Feder 85 geschlossen wird.

Bei nicht an das Fernsprechendgerät 1 angeschlossenem Telefonhandapparat 5, 10 liegt die gesamte Gleichspannung der Gleichspannungsquelle 35 am ersten Pol 20 an. Über die Überspannungsschutzschaltung 40 wird diese Gleichspannung dem Analog-Digital-Wandler 105 zugeführt und dort digitalisiert. Die Überspannungsschutzschaltung 40 verhindert dabei, daß insbesondere bei angeschlossenem Telefonhandapparat 5, 10 Spannungsspitzen an den Analog-Digital-Wandler 105 gelangen und den Baustein zerstören. Die Überspannungsschutzschaltung 40 ist dabei so dimensioniert, daß die Spannung am ersten Pol 20 nahezu der Spannung U_{H} zwischen dem Analog-Digital-Wandler 105 und der Überspannungsschutzschaltung 40 entspricht. Bei einer Gleichspannung der Gleichspannungsquelle 35 von beispielsweise 5V wird in dem beschriebenen Fall also auch zwischen dem Analog-Digital-Wandler 105 und der Überspannungsschutzschaltung 40 eine Spannung U_{H} von nahezu 5V anliegen.

Bei an das Fernsprechendgerät 1 angeschlossenem Telefonhandapparat 5, 10 und abgehobenem Handhörer 10 ist der Schalter 120 geöffnet und es ergibt sich ein Strompfad von der Gleichspannungsquelle 35 über den ersten Widerstand 30, die Hörkapsel 55 und den zweiten Widerstand 45 zum Bezugspotential 50. Bei einer Dimensionierung des ersten und des zweiten Widerstandes 30 und 45 von beispielsweise jeweils 27kΩ und einem Innenwiderstand der Hörkapsel 55 von 200Ω ergibt sich am ersten Pol 20 nun eine Spannung in der Größenordnung von 2,5 V, wenn die Spannung der Gleichspannungsquelle 35 nach wie vor 5 V beträgt. Dann wird auch die Spannung U_{H} zwischen dem Analog-Digital-Wandler 105 und der Überspannungsschutzschaltung 40 nahzu 2,5 V betragen.

Bei an das Fernsprechendgerät 1 angeschlossenem Handapparat 5, 10 und aufgelegtem Handhörer 10 ist der Schalter 120 geschlossen. Dadurch wird der dritte Widerstand 75 der Hörkapsel 55 und dem zweiten Widerstand 45 parallel geschaltet. Bei der oben gewählten Dimensionierung und einer Dimensionierung des dritten Widerstandes 75 von 2,7 kΩ wird die Spannung am ersten Pol 20 aufgrund des nun vorliegenden Spannungsteilerverhältnisses in der Größenordnung von 0,5 V liegen. Das bedeutet, daß auch die Spannung U_{H} zwischem dem Analog-Digital-Wandler 105 und der Überspannungsschutzschaltung 40 nahezu 0,5 V betragen wird.

Das beschriebene Beispiel macht deutlich, daß die drei Zustände des Telefonhandapparates 5, 10 "angeschlossen und aufgelegt"; "angeschlossen und abgehoben" und "nicht angeschlossen" auch durch drei unterschiedliche Spannungen U_{H} zwischem dem Analog-Digital-Wandler und der Überspannungsschutzschaltung 40 charakterisiert sind. Diese Tatsache wird durch die

Steuerschaltung 15 zur Erkennung des Zustandes des Telefonhandapparates 5, 10 ausgenutzt.

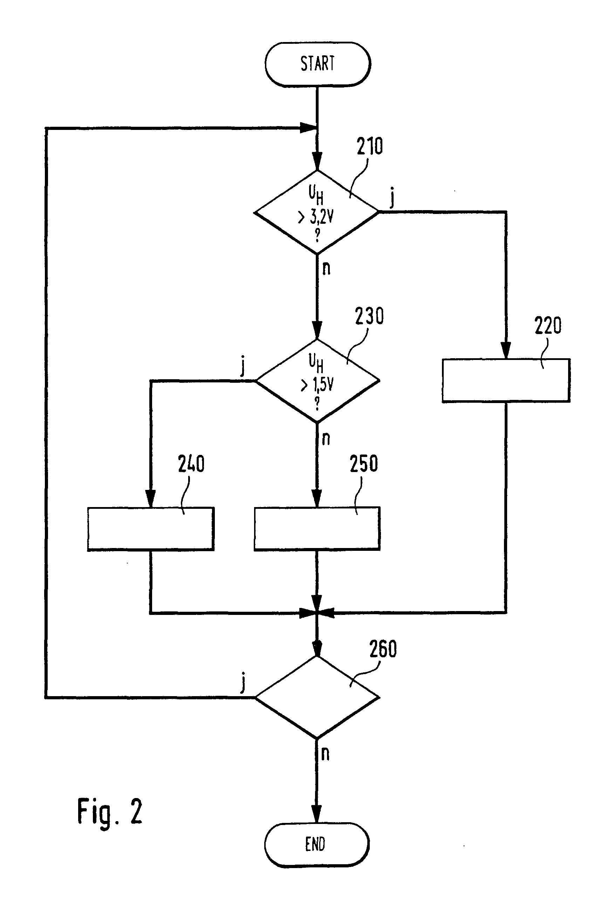

Figur 2 zeigt einen Ablaufplan für die Steuerschaltung 15. Die Steuerschaltung
15 ist vorzugsweise als Mikroprozessor ausgebildet. Der Steuerschaltung 15 werden die Spannungswerte U_{H} digitalisiert zugeführt. Der Ablauf gemäß Figur 2 startet bei Schleifenbelegung im Gesprächszustand. Bei einem Programmpunkt 210 wird geprüft, ob die Spannung U_{H} größer als 3,2 V ist. Ist dies der Fall, so wird zu Programmpunkt 220 verzweigt, andernfalls zu Programmpunkt 230. Bei Programmpunkt 220 wird der Umschalter 210 in seine erste Schalterstellung zur Verbindung der Freisprecheinrichtung 90 mit der Steuerschaltung 15 umgeschaltet, sofern er sich nicht schon in dieser Schalterstellung befindet. Die Steuerschaltung 15 hat somit erkannt, daß der Telefonhandapparat 5, 10 nicht angeschlossen ist. Das Telefongespräch kann nun mit Hilfe der Freisprecheinrichtung 90 geführt werden. Bei Programmpunkt 230 wird geprüft, ob die Spannung U_{H} größer als 1,5 V ist. Ist dies der Fall, so wird zu Programmpunkt 240 verzweigt, andernfalls zu Programmpunkt 250. Bei Programmpunkt 240 hat die Steuerschaltung 15 einen angeschlosenen Telefonhandapparat 5, 10 mit abgenommenen Handhörer 10 erkannt. Falls sich der Umschalter 110 nicht in der zweiten Schalterstellung befindet, findet bei Programmpunkt 240 eine Umschaltung in die zweite Schalterstellung statt, so daß das Mikrofon 115 mit der Steuerschaltung 15 verbunden wird. Die Freisprecheinrichtung 90 wird dadurch abgeschaltet. Das Telefongespräch wird dann mit dem Telefonhandapparat 5, 10 geführt. Bei Programmpunkt 250 hat die Steuerschaltung 15 einen angeschlossenen Handapparat 5, 10 im aufgelegten Zustand erkannt. Falls der Umschalter 110 nicht schon in der ersten Schalterstellung ist, wird er dann bei Programmpunkt 250 in die erste Schalterstellung umgeschaltet, so daß die Freisprecheinrichtung 90 mit der Steuerschaltung 15 verbunden ist. Das Telefongespräch wird dann also über die Freisprecheinrichtung 90 geführt, das Mikrophon 115 ist abgeschaltet, die Hörkapsel 55 bleibt jedoch weiterhin aktiv, was jedoch nicht zu einer Störung beim Benutzer führt, der dadurch die Möglichkeit hat, seinen Gesprächspartner sowohl über die Freisprecheinrichtung 90 als auch über die Hörkapsel 55 zu hören. Von Programmpunkt 220, Programmpunkt 240 und Programmpunkt 250 wird jeweils zu Programmpunkt 260 verzweigt. Bei Programmpunkt 260 wird geprüft, ob der Gesprächszustand andauert. Ist dies der Fall, so wird zu Programmpunkt 210 verzweigt und der Zustand des Telefonhandappates 5, 10 aufs Neue geprüft. Andernfalls kann das Fernsprechendgerät 1 abgeschaltet werden.

Durch den beschriebenen Ablauf findet eine Umschaltung auf Freisprechen also auf jeden Fall statt, wenn kein Telefonhandapparat 5,10 angeschlossen ist, beziehungsweise ein angeschlossener Telefonhandapparat 5, 10 sich im aufgelegten Zustand befindet.

In der ersten Schalterstellung des Umschalters 110 ist die Freisprecheinrichtung 90 mit der Steuerschaltung 15 verbunden. Auf diese Weise sind zwischen der Freisprecheinrichtung 90 und dem Fernsprechendgerät 1 beziehungsweise einem angeschlossenen Fernsprechnetz NF-Fernsprechsignale austauschbar. Gleichzeitig können NF-Fernsprechsignale von der Hörkapsel 55 empfangen werden, wenn der Telefonhandapparat 5, 10 angeschlossen ist. Aufgrund der Schalterstellung des Umschalters 110 ist es jedoch nicht möglich, daß das Mikrophon 115 NF-Fernsprechsignale an das Fernsprechendgerät 1 zur Weiterleitung an ein angeschlossenes Fernsprechnetz überträgt. Auf diese Weise wird verhindert, daß vom Mikrophon der Freisprecheinrichtung 90 ausgesandte NF-Fernsprechsignale von Signalen des Mikrophons 115 gestört werden. Dies könnte z. B. bei einem auf ein vibrierendes Fahrzeugteil beim Einsatz in einem Kraftfahrzeug abgelegten Telefonhandapparat 5,10 der Fall sein. In der zweiten Stellung des Umschalters 110 hingegen ist das Mikrophon 115 mit der Steuerschaltung 115 verbunden und ein Austausch von NF-Fernsprechsignalen zwischen der Freisprecheinrichtung 90 und dem Fernsprechendgerät 1 nicht mehr möglich. Auf diese Weise werden die vom Mikrophon 115 übertragenen NF-Fernsprechsignale nicht durch Signale vom Mikrophon der Freisprecheinrichtung 90 gestört.

In einem weiteren Ausführungsbeispiel kann in das Fernsprechendgerät 1 ein Rundfunkempfangsgerät integriert sein, so daß die Freisprecheinrichtung 90 in vorteilhafter Weise die Lautsprecher des Rundfunkempfangsgerätes zur Tonwiedergabe mitverwenden kann.

Das erfindungsgemäße Fernsprechendgerät 1 eignet sich besonders für den Einsatz in Kraftfahrzeugen, die Verwendung ist jedoch nicht auf diesen Bereich beschränkt.

Es ist auch erfindungsgemäß, andere als in dem Ausführungsbeispiel beschriebene Prüfschaltungen einzusetzen, die den Zustand des Telefonhandapparates auf andere Weise erkennen, beispielsweise über mechanisch durch den Telefonhandapparat in Abhängigkeit seines Zustandes betätigbare Schalter in dem Fernsprechendgerät.

## Patentansprüche

1. Fernsprechendgerät (1) mit einem Anschluß (20, 25, 95, 100) für einen Telefonhandapparat (5, 10), wobei bei aufgelegtem Telefonhandapparat (5, 10) eine Freisprecheinrichtung (90) und bei abgenommenem Telefonhandapparat (5, 10) der Telefonhandapparat (5, 10) aktivierbar ist, **dadurch gekennzeichnet, daß** das Fernsprechendgerät (1) eine Prüfschaltung aufweist, mittels der erkennbar ist, ob an dem Anschluß (20, 25, 95, 100) ein Telefonhandapparat (5, 10) angeschlossen ist und ob ein angeschlossener Telefonhandapparat (5, 10) sich in aufgelegtem oder abgenommenem Zustand befindet und daß eine Umschaltung zwischen der Freisprecheinrichtung (90) und dem Telefonhandapparat (5, 10) in Abhängigkeit des Prüfergebnisses der Prüfschaltung erfolgt.

2. Fernsprechendgerät (1) nach Anspruch 1, **dadurch gekennzeichnet, daß** die Prüfschaltung eine Gleichspannungsquelle (35), die über einen ersten Widerstand (30) mit einem ersten Pol (20) des Anschlusses (20, 25, 95, 100) verbunden ist, einen Analog-/Digital-Wandler (105), der vorzugsweise über eine Überspannungsschutzschaltung (40) ebenfalls mit dem ersten Pol (20) verbunden ist, und eine vorzugsweise als Mikroprozessor ausgebildete Steuerschaltung (15), die einen Umschalter (110) zur Umschaltung zwischen der Freisprecheinrichtung (90) und dem Telefonhandapparat (5, 10) ansteuert, umfaßt und daß eine Umschaltung auf Freisprechen auf jeden Fall erfolgt, wenn kein Telefonhandapparat angeschlossen ist und/oder ein angeschlossener Telefonhandapparat sich im aufgelegten Zustand befindet.

3. Fernsprechendgerät (1) nach Anspruch 2, **dadurch gekennzeichnet, daß** der Anschluß (20, 25, 95, 100) einen zweiten, einen dritten und einen vierten Pol (25), (95) und (100) aufweist, wobei der erste und der zweite Pol (20, 25) zum Anschluß einer Hörkapsel (55) des Telefonhandapparates (5, 10) und der dritte und der vierte Pol (95, 100) zum Anschluß eines Mikrofons (115) des Telefonhandapparates (5, 10) dient, daß durch den Umschalter (110) entweder das Mikrofon (115) oder die Freisprecheinrichtung (90) mit der Steuerschaltung (15) verbindbar ist und daß der zweite Pol (25) über einen zweiten Widerstand (45) mit dem Bezugspotential (50) verbunden ist.

4. Fernsprechendgerät (1) nach Anspruch 1, 2 oder 3, **dadurch gekennzeichnet, daß** das Fernsprechendgerät (1) ein Rundfunkempfangsgerät umfaßt.

## Claims

1. Telephone terminal (1) having a connection (20, 25, 95, 100) for a telephone handset (5, 10), in which case a hands-free device (90) can be activated when the telephone handset (5, 10) is on the rest, and the telephone handset (5, 10) can be activated when it is removed from the rest, **characterized in that** the telephone terminal (1) has a test circuit by means of which it is possible to determine whether a telephone handset (5, 10) is connected to the connection (20, 25, 95, 100) and whether a connected telephone handset (5, 10) is on the rest or has been removed from the rest, and **in that** switching takes place between the hands-free device (90) and the telephone handset (5, 10) as a function of the test result of the test circuit.

2. Telephone terminal (1) according to Claim 1, **characterized in that** the test circuit has a DC voltage source (35), which is connected via a first resistor (30) to a first pole (20) of the connection (20, 25, 95, 100), has an analogue/digital converter (105) which is likewise connected to the first pole (20), preferably via an overvoltage protective circuit (40), and has a control circuit (15), which is preferably in the form of a microprocessor and drives a changeover switch (110) for switching between the hands-free device (90) and the telephone handset (5, 10), and **in that** switching to hands-free operation always takes place when no telephone handset is connected and/or when a telephone handset that is connected is on the rest.

3. Telephone terminal (1) according to Claim 2, **characterized in that** the connection (20, 25, 95, 100) has a second, a third and a fourth pole (25), (95) and (100), in which case the first and the second pole (20, 25) are used for connection of a receiver capsule (55) of the telephone handset (5, 10), and the third and the fourth pole (95, 100) are used for connection of a microphone (115) of the telephone handset (5, 10), **in that** either the microphone (115) or the hands-free device (90) can be connected to the control circuit (15) by the changeover switch (110), and **in that** the second pole (25) is connected to the reference-earth potential (50) via a second resistor (45).

4. Telephone terminal (1) according to Claim 1, 2 or 3, **characterized in that** the telephone terminal (1) has a broadcast radio receiver.

## Revendications

1. Terminal téléphonique (1) avec un raccordement (20, 25, 95, 100) pour un combiné téléphonique (5, 10) dans lequel, avec un combiné téléphonique (5, 10) raccroché, un dispositif mains libres (90) et, avec un combiné téléphonique (5, 10) décroché, le combiné téléphonique (5, 10) peut être activé, **caractérisé en ce que** le terminal téléphonique (1) présente un circuit de vérification au moyen duquel il est possible de reconnaître si un combiné téléphonique (5, 10) est raccordé au raccordement (20, 25, 95, 100) et si un combiné téléphonique raccordé (5, 10) se trouve dans l'état raccroché ou décroché et **en ce qu'**une commutation entre le dispositif mains libres (90) et le combiné téléphonique (5, 10) se produit en fonction du résultat de vérification du circuit de vérification.

2. Terminal téléphonique (1) selon la revendication 1, **caractérisé en ce que** le circuit de vérification comprend une source de tension continue (35) qui est reliée par une première résistance (30) à un premier pôle (20) du raccordement (20, 25, 95, 100), un convertisseur analogique/numérique (105) qui est relié de préférence par un circuit limiteur de tension (40) également au premier pôle (20), et un circuit de commande (15) conçu de préférence comme microprocesseur, qui commande un commutateur (110) pour commuter entre le dispositif mains libres (90) et le combiné téléphonique (5, 10), et **en ce qu'**une commutation en conversation mains libres se produit en tous les cas, lorsqu'aucun combiné téléphonique n'est raccordé et/ou qu'un combiné téléphonique raccordé se trouve dans l'état raccroché.

3. Terminal téléphonique (1) selon la revendication 2, **caractérisé en ce que** le raccordement (20, 25, 95, 100) présente un deuxième, un troisième et un quatrième pôle (25), (95) et (100), le premier et le deuxième pôle (20, 25) servant au raccordement d'un écouteur (55) du combiné téléphonique (5, 10) et le troisième et le quatrième pôle (95, 100) au raccordement d'un microphone (115) du combiné téléphonique (5, 10), et **en ce que** grâce au commutateur (110), soit le microphone (115) soit le dispositif mains libres (90) peut être raccordé au circuit de commande (15) et **en ce que** le deuxième pôle (25) est relié par une deuxième résistance (45) au potentiel de référence (50).

4. Terminal téléphonique (1) selon la revendication 1, 2 ou 3, **caractérisé en ce que** le terminal téléphonique (1) comprend un appareil de réception radio.
